# DEMANDE DE BREVET EUROPEEN

(11) **EP 0 558 126 A1**
(43) Date de publication de la demande: **01.09.1993**
(21) Numéro de dépôt: 93200464.1
(22) Date de dépôt: 18.02.1993
(51) Int. Cl.: H04L 12/26, H04M 11/06

(54) **Système synchrone permettant de contrôler des modems qui lui sont rattachés et modems convenant pour un tel système**

(30) Priorité: 26.02.1992 FR 9202251
(71) Demandeur: PHILIPS COMMUNICATION D'ENTREPRISE, 75013 Paris (FR); Philips Electronics N.V., 5621 BA Eindhoven (NL)
(72) Inventeur: Le Riche, Olivier, Société Civile S.P.I.D., F-75008 Paris (FR); Daulasim, Khamphuc, Société Civile S.P.I.D., F-75008 Paris (FR)
(74) Mandataire: Chaffraix, Jean

(57) **Abrégé**

Ce système synchrone permet de contrôler des modems (Mi,j) qui lui sont rattachés au moyen d'une interface de jonction (de type défini par la norme V24 notamment) comportant une pluralité de circuits de jonction. Dans ce système :
- les modems sont du type bi-mode : mode synchrone et mode asynchrone, pour lequel ils sont aptes à exécuter des commandes du type HAYES,
- certains circuits de jonction sont mis dans un état particulier lors d'un contrôle,
- les modems sont munis de moyens pour détecter cet état particulier pour être mis en mode asynchrone afin de recevoir lesdites commandes de type HAYES.

Application : réseaux de transmission de données fonctionnant selon l'avis X25.

## Description

La présente invention concerne un système synchrone permettant de contrôler des modems qui lui sont rattachés au moyen d'une interface de jonction (de type défini par la norme V24 notamment) comportant une pluralité de circuits de jonction.

L'invention concerne aussi un modem convenant pour un tel système.

La présente invention trouve d'importantes applications dans les domaines de la transmission et de la commutation de données. Les systèmes synchrones sont utilisés pour le traitement des paquets définis par la norme X25.

Un tel système est décrit dans l'article "Compac : the Multiservice Range for Data Switching" de D. BEHAGHEL et al. paru dans la revue COMMUTATION & TRANSMISSION, n^{o}1, 1990.

Le problème qui se pose avec ce genre de système est sa maintenance et plus particulièrement la vérification du bon fonctionnement des modems ou de la liaison qu'ils permettent.

Il est connu que la maintenance des modems peut se faire en leur envoyant des commandes de type HAYES, mais ceci se fait en mode asynchrone.

La présente invention propose un système syncrhone du genre mentionné dans le préambule, qui permet de contrôler ou de superviser les modems sans trop utiliser de moyens matériels supplémentaires.

Pour cela, le système selon l'invention est remarquable en ce que :
- les modems sont du type bi-mode (mode synchrone et mode asynchrone) pour lequel ils sont aptes à exécuter des commandes du type HAYES,
- certains circuits de jonction sont mis dans un état particulier lors d'un contrôle,
- les modems sont munis de moyens pour détecter cet état particulier pour être mis en mode asynchrone afin de recevoir lesdites commandes de type HAYES.

La description suivante, accompagnée des dessins ci-annexés, le tout donné à titre d'exemple non limitatif, fera bien comprendre comment l'invention peut être réalisée.

La figure 1 représente un système synchrone conforme à l'invention.

La figure 2 montre la connexion des modems avec le commutateur de données qui leur est rattaché.

La figure 3 montre comment est reliée la console de gestion avec le modem, via un commutateur de données.

La figure 4 montre l'état particulier de deux circuits de fonctionnement.

La figure 5 explicite le protocole entre la console de gestion et le modem.

La figure 6 explicite les messages envoyés par la console pour superviser le contrôle du modem.

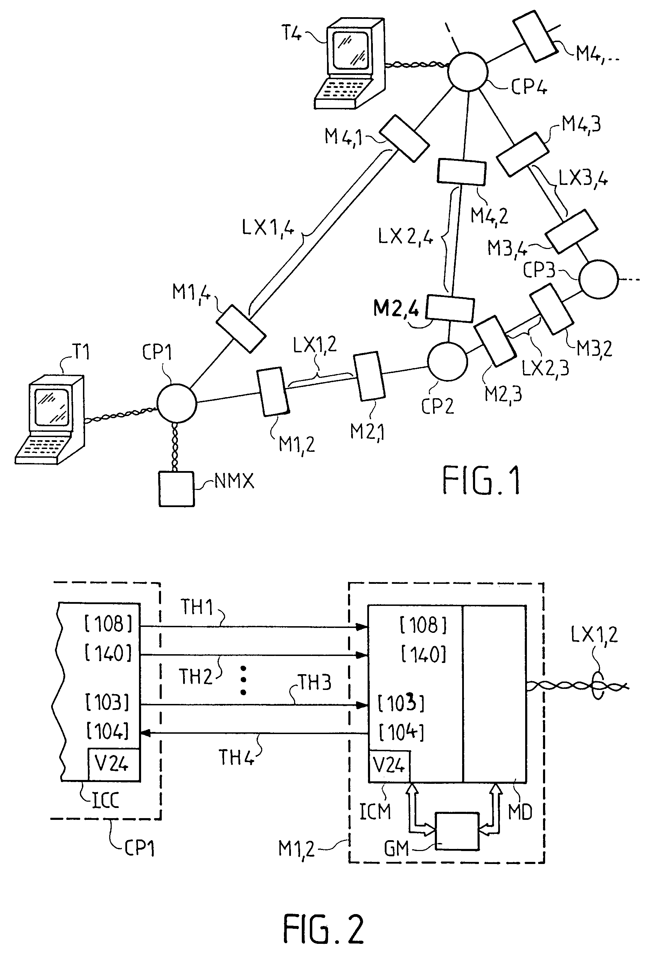

A la figure 1, on a représenté schématiquement un tel réseau, qui se compose notamment de quatre commutateurs de données en paquets CP1, CP2, CP3 et CP4 aptes à commuter des données transmises sous la forme répondant à la norme X25.

A chaque commutateur sont rattachés soit des terminaux, soit des modems, soit tout autre dispositif. Ainsi à la figure 1, le terminal T1, la console de gestion de réseau NMX et les modems M1,2 et M1,4 sont rattachés au commutateur CP1. Les modems M2,1 M2,3 et M2,4 sont rattachés au commutateur CP2, les modems M3,2 et M3,4 au commutateur CP3 et les modems M4,1 M4,2 M4,3 M4,... ainsi que le terminal T4 sont rattachés au commutateur CP4.

Les modems M1,2 et M2,1 sont reliés entre eux par une liaison synchrone de type X25 repérée par la référence LX1,2,
les modems M2,3 et M3,2 par une liaison de même type repérée par la référence LX2,3,
les modems M3,4 et M4,3 par une liaison de même type repérée par la référence LX3,4,
les modems M2,4 et M4,2 par une liaison de même type repérée par la référence LX2,4,
les modems M4,1 et M1,4 par une liaison de même type repérée par la référence LX1,4.

A la figure 2, on a représenté la manière dont les modems sont reliés aux commutateurs de données. Sur cette figure,on a montré comment le modem M1,2 est relié au commutateur CP1. La liaison obéit à l'avis V24 du CCITT. Sur cette figure on a représenté les fils essentiels pour l'invention soit : TH1, TH2, TH3 et TH4. Ces différents fils relient les circuits de jonction portant les références conformes à l'avis CCITT V24 précité et relient donc une interface de jonction ICC rattachée au commutateur CP1 avec une interface de jonction ICM rattachée au modem M1,2. Les fils TH1 et TH2 sont relatifs aux circuits [108] et [140]. On notera en outre que le fil TH3 transmet des données depuis le commutateur de données CP1 vers le modem M1,2 en transitant par le circuit [103], alors que le fil TH4 transmet des données en sens inverse en empruntant le circuit [104]. Les parties MD et GM du modem représentent le reste du modem. La partie MD à laquelle est connectée la ligne LX1,2 comporte entre autres les moyens de modulation et de démodulation tandis que la partie GM représente un ensemble à base de processeur qui gère la partie MD ainsi que l'interface ICM. On trouvera plus de détails de ces modems dans l'article "Une nouvelle génération de modems à base de circuits intégrés à grande échelle" de J.C. INVERNICI, O. LERICHE, et al. paru dans la revue :
COMMUTATION & TRANSMISSION n°3 de 1986.

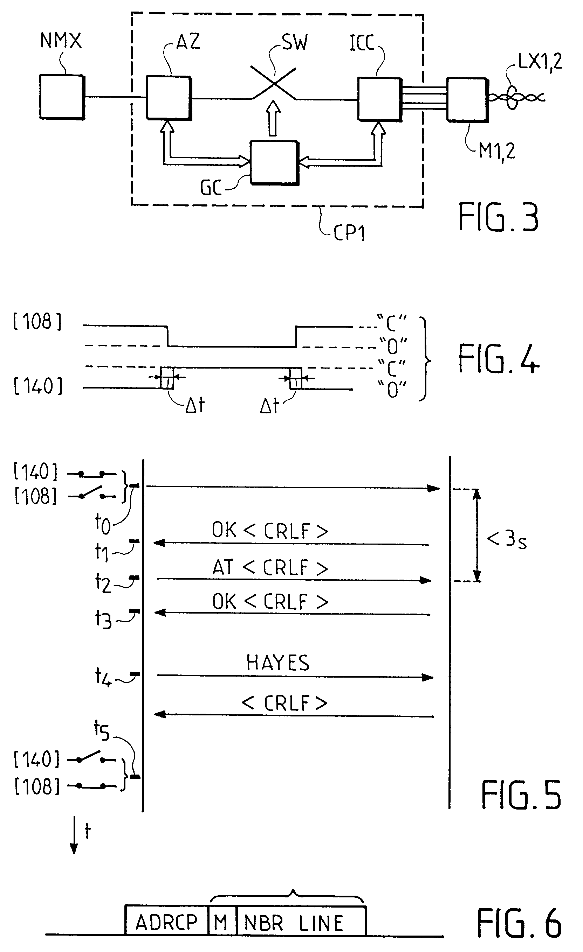

A la figure 3, on a représenté schématiquement un commutateur de données qui est par exemple du type précité. On a surtout représenté les organes indiqués dans la relation établie entre la console de gestion NMX et le modem M1,2. La partie d'analyse AZ est un bloc qui explicite la fonction d'analyse des données issues de la console de gestion. Cette analyse consiste à déterminer, au moyen du centre de gestion GC, la voie de sortie du réseau de commutation SW faisant partie du commutateur CP1. Le centre de gestion pilote aussi l' interface de communication ICC du type V24 connecté au modem M1,2.

Conformément à l'invention (figure 4), pour mettre le modem en mode asynchrone, deux circuits de l'interface ICC sont mis dans un état particulier. Ce sont les signaux des circuits [108] et [140].

Pour mettre le modem en mode asynchrone le signal du circuit [108] est mis à l'état "O" (ouvert) tandis que le circuit [140] est à l'état "C" (fermé) pratiquement au même instant. On a néanmoins prévu une tolérance de temps Δt pour apprécier cette simultanéité. Le circuit [140] doit être mis à l'état "C" avant que le circuit [108] ne soit mis à l'état "O".

La figure 5 détaille le protocole du dialogue qui s'installe.

A l'instant t0, le circuit [140] est mis à l'état fermé et le circuit [108] à l'état ouvert. Ceci est détecté au niveau du modem qui passe alors en mode asynchrone et un laps de temps de 3 s est démarré. Un accusé de réception "OK" est envoyé à l'instant t1 par le modem, suivi du retour chariot 〈CRLF〉 par le circuit [103]. Ceci est transmis via le commutateur de données à la console de gestion NMX. Depuis celle-ci on peut envoyer à l'instant t2 un signal AT qui est une commande ou le préalable à l'envoi d'une séquence de commandes de type HAYES. Ce signal AT est envoyé au modem qui le reçoit sur le circuit [103]. Il est à noter que ce signal doit survenir avant le laps de temps de 3 s déjà mentionné. Si il survenait après, le modem retournerait alors dans son mode synchrone. A l'instant t3, le modem accuse réception en envoyant à nouveau "OK". Puis à l'instant t4, la console de gestion peut envoyer sa commande de type HAYES ou une séquence de commandes. Lorsque la console a envoyé cette séquence, elle libère la connexion qui avait été établie entre elle et le modem. Cette libération détectée au niveau du centre de gestion GC provoque une commande de l'interface ICC pour que les circuits [140] et [108] reviennent à l'état ouvert et fermé respectivement.

La figure 6 explicite la façon dont les circuits [140] et [108] peuvent être mis dans les différents états précités.

Lorsque la console NMX envoie une demande de gestion de modem, elle envoie dans une tranche de temps de la trame X25 un code d'adresse ADRCP où est rattaché le modem, un code M signifiant que l'on veut faire de la maintenance et un code NBRLINE signifiant le numéro de la ligne sur laquelle le modem est connecté.

Lorsque le commutateur de données détecte son adresse et le code M, il active le circuit d'interface de la manière précitée.

Lorsque la connexion est libérée, les circuits [140] et [108] sont remis à l'état normal.

Il est à noter que la mise en oeuvre de l'invention peut être mise en oeuvre sans nécessité de moyens supplémentaires. Au niveau du modem, la surveillance des circuits est déjà effectuée ; l'organe GM détecte la configuration des circuits [108] et [140] pour assurer le protocole sans moyens supplémentaires. De même, au niveau du commutateur de données la détection que l'information M est présente et que NBRLINE est la liaison concernée par le commutateur, active le centre GC pour que l'interface ICC agisse sur les circuits [108] et [140].

## Revendications

1. Système synchrone permettant de contrôler des modems qui lui sont rattachés au moyen d'une interface de jonction comportant une pluralité de circuits de jonction, caractérisé en ce que :
- les modems sont du type bi-mode : mode synchrone et mode asynchrone, pour lequel ils sont aptes à exécuter des commandes de gestion,
- certains circuits de jonction sont mis dans un état particulier lors d'un contrôle,
- les modems sont munis de moyens pour détecter cet état particulier pour être mis en mode asynchrone afin de recevoir lesdites commandes de gestion.

2. Système synchrone selon la revendication 1, caractérisé en ce que le moyen pour détecter ledit état particulier comporte des moyens de temporisation pour remettre le modem au mode synchrone lorsqu'aucune commande n'a été reçue depuis la détection de l'état particulier.

3. Système synchrone selon l'une des revendications 1 ou 2, caractérisé en ce que les circuits de jonction sont les circuits [140] et [108] de la norme V24, mis respectivement à l'état fermé et ouvert, pour déclencher le mode synchrone du modem.

4. Système synchrone selon une des revendications 1 à 3, caractérisé en ce que les commandes de gestion comprennent des commandes de type HAYES.

5. Modem convenant pour le système selon les revendications 1 à 3, caractérisé en ce qu'il est du type bi-mode : mode synchrone et mode asynchrone pour lequel il est apte à exécuter des commandes de gestion, et qu'il est muni de moyens pour détecter ledit état particulier pour être mis en mode asynchrone afin de recevoir lesdites commandes de gestion.

6. Modem convenant pour le système selon les revendications 1 à 3, caractérisé en ce que les moyens pour détecter ledit état particulier comportent des moyens de temporisation pour remettre le modem au mode synchrone lorsqu'aucune commande n'a été reçue depuis la détection de l'état particulier.

7. Modem selon une des revendications 6 ou 7, caractérisé en ce que les commandes comprennent des commandes de HAYES.
